# EUROPEAN PATENT SPECIFICATION

(11) **EP 0 500 176 B1**
(45) Date of publication and mention of the grant of the patent: **07.05.1997**
(21) Application number: 92200425.4
(22) Date of filing: 14.02.1992
(51) Int. Cl.: B01J 37/06

(54) **Washing treatment for catalysts and/or catalyst precursors**
Verfahren zum Waschen von Katalysatoren oder Katalysatorvorläufern
Traitement de lavage pour catalyseurs ou précurseurs de catalyseur

(30) Priority: 19.02.1991 GB 9103417
(43) Date of publication of application: 26.08.1992
(73) Proprietor: SHELL INTERNATIONALE RESEARCH MAATSCHAPPIJ B.V., 2596 HR Den Haag (NL)
(72) Inventor: Reinalda, Donald, NL-1031 CM Amsterdam (NL); Derking, Anke, NL-1031 CM Amsterdam (NL)

(56) References cited:
- EP-A- 0 412 614
- WO-A-88/03920
- CH-A- 248 804
- FR-A- 2 487 219
- GB-A- 1 295 474
- US-A- 4 212 771

## Description

The present invention relates to a process for the preparation of hydrocarbons from hydrogen and carbon monoxide, using extruded catalysts which catalysts have been subjected to a washing treatment and have a relatively low content of sulphur containing ions, and, optionally, alkali or alkaline earth ions.

Swiss patent No. 248804 (CH 248804) concerns a process for the preparation of secondary amines. Catalysts for use in the process are prepared by a process comprising preparing a precursor by precipitation, forming tablets and calcining the tablets so-formed. CH 248804 discloses that the calcined product may be washed to remove contaminants, in particular alkali metals.

It is known that the starting materials in the preparation of a catalyst carrier can be washed prior to extrusion to produce a high purity starting material. It is outlined in the prior art, European patent application publication number 167 324 (EP 167 324), that this process, however, holds the disadvantage that washing a powdered starting material is difficult and expensive.

EP 167 324 discloses a washing process to be carried out after extrusion of zeolite containing silica-rich solids, but preferably prior to calcination of the extrudates in air. It is noted in this document that washing the extrudate after calcination in air is very undesirable since calcination can cause the alkali metal to be trapped, perhaps by encapsulation, so that removal by ion exchange is possible only with great difficulty and is usually incomplete.

However, disadvantages of washing an extruded carrier prior to calcination include the weakness of the extruded material, resulting in breakage of the extrudates prior to calcination, and the considerable loss of valuable metal compounds extruded together with the carrier.

It has now been found, that the activity and selectivity of catalysts for use in the process of the invention can be improved by washing the catalyst or a catalyst precursor obtained after calcination of a non-washed extrudate with at least one aqueous wash

The present invention therefore relates to a process for the preparation of hydrocarbons by contacting a mixture of carbon monoxide and hydrogen with an extruded catalyst active for that process, comprising a catalytically active metal and a porous carrier, which carrier contains not more than 0.1% by weight of sulphur containing ions, and optionally not more than 0.5% by weight of alkali or alkaline earth ions which catalyst has been prepared by a process comprising washing the catalyst or a catalyst precursor obtained after calcination of a non-washed extrudate with at least one aqueous wash.

The washing treatment may be carried out with an aqueous wash comprising water or a mixture of water and one or more water-miscible organic compounds. The water-miscible organic compound may be, for example, an alcohol, preferably an alcohol having from 1 to 10 carbon atoms, more preferably an alcohol having from 1 to 4 carbon atoms, especially methanol or ethanol.

The washing treatment may be carried out with an aqueous wash comprising one or more electrolytes. The one or more electrolytes which may be present in the wash may be selected from organic acids, inorganic acids or salts thereof. Preferably, the electrolyte is selected from the group consisting of alkanoic acids having from 1 to 12 carbon atoms, more preferably from 1 to 6 carbon atoms; dicarboxylic acids, preferably having from 1 to 6 carbon atoms; hydrogen fluoride; hydrogen chloride; hydrogen bromide; nitric acid; nitrous acid; perchloric acid; phosphoric acid and/or one or more salts thereof, preferably ammonium salts. The alkanoic and dicarboxylic acids are optionally substituted by alkoxy groups having less than 5 carbon atoms, hydroxy groups and cyano groups.

In a particulary preferred embodiment of the invention, formic acid, acetic acid, propionic acid, butyric acid, oxalic acid, malonic acid, succinic acid, glutaric acid, phthalic acid, nitric acid, hydrogen chloride, hydrogen bromide and/or ammonium salts thereof are used as the electrolyte in the aqueous wash.

Preferably the concentration of electrolyte in the aqueous wash is high enough to ensure reasonable ion-exchange capacity. To ensure a reasonable ion-exchange capacity, the electrolyte concentration should be higher than 0.05 M. For economic reasons it is preferred to use an aqueous wash with an electrolyte concentration of no greater than 5 M.

The washing treatment can be carried out in a number of ways, such as by well known batch processes as well as by known continuous processes. In order to minimize the amount of wash liquid, the washing treatment is preferably carried out counter-currently.

Typically the washing treatment is carried out with a liquid/solid volume ratio of at least 0.4, preferably of from 0.7 to 50, more preferably of from 1 to 10.

Preferably the washing treatment comprises two steps, in which first step of the washing treatment a wash comprising one or more electrolytes is used and in which second step of the washing treatment water or a mixture of water and one or more water-miscible organic compounds is used.

More preferably, the washing treatment comprises three steps, wherein the catalyst and/or catalyst precursor is washed in each of the first two steps with a solution comprising one or more electrolytes. The electrolyte concentration in the wash used in the first two steps is preferably between 0.05 and 5 M in both steps, more preferably the concentration in the second step is lower than the concentration in the first step. In the third step the catalyst and/or catalyst precursor is conveniently washed with water or with mixture of water and a water-miscible organic compound.

If desired, the washing treatment may be preceded by a pre-wetting or filling of the pore volume of the calcined extrudates by impregnation with a suitable liquid, preferably water.

The washing treatment is conveniently carried out at temperatures of from 0 °C to 120 °C, preferably of from 10 °C to 95 °C. Most conveniently it is carried out at ambient temperature. Each step of the washing treatment is typically carried out for a period of from 2 to 120 minutes, preferably from 5 to 40 minutes, more preferably from 5 to 25 minutes. It is to be understood that, especially in cases in which the washing treatment is carried out in a continuous manner, each step may be divided into a number of smaller steps, which smaller steps may typically have a duration of about 5 minutes.

The washing treatment is particularly effective for the removal of sulphur and optionally sodium compounds from calcined porous carriers. After this washing treatment the washed product preferably contains no more than 0.4% by weight, more preferably no more than 0.3% by weight of sodium. Preferably the washed product does not contain more than 0.04% by weight of sulphur.

After the above-described washing treatment, the washed product may be dried. Drying typically takes place at an air temperature of from 10 to 300 °C. In cases in which organic compounds or ammonium ions are still present in appreciable amounts in the washed product, it is most desirable to calcine the washed product to a final air temperature of at most 1000 °C, preferably of from 400 to 750 °C.

The washing treatment is preferably applied to the catalyst precursors.

The extrudate suitably comprises at least one refractory oxide. The extrudate preferably comprises silica, silica-alumina, alumina, zirconia, titania or chromium oxide. Extrudates comprising silica are especially preferred.

Extruded porous carriers can be prepared in a number of ways known in the art. An example of a suitable process is disclosed in European patent application publication No. 0 309 048, wherein a process for the preparation of a shapable dough for silica extrudates is disclosed, which process comprises mixing and kneading a particulate silica with water and with ammonia or an ammonia releasing compound. After extrusion the extrudate is dried and calcined to a final temperature of between 300 and 1000 °C. European patent application publication No. 0 313 163 discloses the preparation of a shapable dough of silica-alumina by mixing and kneading a particulate silica-alumina with water and with an alkanolamine or ammonia. After extrusion, the extrudate is dried and calcined to a final temperature of between 300 and 1000 °C.A recently filed British patent application, No. 8925979.0, now published as European patent application publication No. 0 428 223 discloses a process for the preparation of extrudates comprising silica and a Group IVb metal oxide, by mulling a mixture of finely divided silica, a water-soluble Group IVb compound and water, extrusion of the resulting mixture and optionally drying and/or calcining the extrudate.

The washing treatment improves the selectivity and/or activity of catalysts used in the process of the present invention.

In a preferred embodiment of the invention the washing treatment is used in a process for the preparation of extrudates suitable for use in the manufacture of catalysts or catalyst precursors, which process comprises mulling a mixture of finely divided silica, a water soluble Group IVb compound and water, which mixture has a solids content of from 20 to 50% by weight, extruding the mixture, calcining the extrudate so-obtained and washing the extrudate as hereinbefore described.

The finely divided silica to be used in the process for the preparation of extrudates usually comprises silica aggregates having an average diameter which is less than 100 micron, preferably between 15 and 80 micron, more preferably between 35 and 65 micron.

The silica which may be used in the process is often described as amorphous silica, and is usually a porous silica. The word amorphous, when used in combination with silica, denotes a lack of crystal structure, as defined by X-ray diffraction. Some short-range ordering may be present and is indicated by electron diffraction studies but this ordering gives no sharp X-ray diffraction pattern. The extent of porosity may be indicated for instance by the pore volume and/or the surface area. For general information about amorphous silica, reference is made to Kirk-Othmer, Encyclopedia of Chemical Technology, Third edition, Vol. 20, p. 766 ff.

A suitable silica to be used in the process for the preparation of extrudates is silica gel, a more or less coherent, rigid, continuous three-dimensional network of particles of colloidal silica. The amount of silicon dioxide is usually between 96 and 99.5% by weight. The aggregate particle size is usually between 3 and 25 micron, while the ultimate particle size is usually between 1 and 100 nm. The surface area may vary between 150 and 900 m²/g, and is often between 200 and 700 m²/g. Especially suitable silica gels are spray dried silica gels. It is preferred not to use calcined silica gels, i.e. silica gels which have been heated to temperatures around 500 °C and higher.

A preferred kind of silica to be used in the process for the preparation of extrudates is precipitated silica. Precipitated silica is composed of aggregates of ultimate particles of colloidal size that have not become linked in massive gel network during the preparation process. The amount of silicon dioxide is usually between 80 and 99.5 % by weight. The aggregate particle size is usually between 3 and 65 micron, while the ultimate particle size is usually between 3 and 30 nm. The surface area may vary between 30 and 900 m²/g, and is often between 45 and 700 m²/g.

Precipitated silica may be prepared from a silicate solution, preferably a sodium or potassium silicate, using a relatively low silicate concentration when compared with silica gel preparation, by addition of an acid, preferably sulphuric acid or hydrochloric acid. The precipitates are separated from the mother liquor by filtration, optionally followed by spray-drying.

Another preferred silica to be used in the process of the present invention is pyrogenic or fumed silica. This type of silica is usually obtained in high temperature processes as vaporising silica, usually sand, at 2000 °C and cooling, thus forming anhydrous amorphous silica particles. Other processes are the oxidation of silicon tetrachloride vapour with oxygen or with hydrogen and/or methane and flame hydrolysis of silicon ester vapours. Pyrogenic silica tends to be less dense than other types of silica. The amount of silicon dioxide is usually more than 99.5% by weight. The aggregate particle size is usually between 1 and 10 micron, often between 2 and 5 micron, while the ultimate particle size is usually between 1 and 100 nm. The surface area may vary between 10 and 500 m²/g, and is often between 15 and 400 m²/g.

The purity of the silica to be used in the process for the preparation of extrudates is suitably more than 97% by weight based on water free samples, preferably more than 98%, more preferably more than 99% It is preferred to use a silica which contains an amount of sodium which is less than 10,000 ppmw, more preferably less than 8,000 ppmw, still more preferably less than 6,000 ppmw. The amount of sulphur is suitably less than 7,500 ppmw, preferably less than 4,500 ppmw, more preferably less than 1500 ppmw.

The solids content of the mixture to be mulled in the process is typically of from 20 to 50 % by weight, preferably between 25 and 40% by weight, more preferably about 30%.

The water soluble Group IVb compound to be used in the process may be any water soluble Group IVb compound or mixtures thereof, and is preferably a water soluble zirconium or titanium compound, most preferably a zirconium compound. Preferably a Group IVb compound is used which gives an alkaline solution on dissolution in water. Suitable Group IVb compounds may be salts derived from organic acids, especially acetic acid and propionic acid, but also compounds like acetylacetonate derivatives may be used. Other compounds are Group IVb halides, Group IVb oxyhalides and cyclopentadienyl derivatives, e.g. zirconocene. A preferred compound is ammonium zirconium carbonate, either as such or as a stabilised solution, for instance a solution stabilised by an organic acid such as tartaric acid. The amount of Group IVb metal to be used is suitably from 3 to 100% by weight, calculated as the amount of Group IVb metal dioxide, based on the amount of water free silica. Preferably the amount of Group IVb metal is from 5 to 60%, more preferably from 5 to 20%, most preferably about 10%.

After mixing the components, the mixture is mulled for a certain period, usually from 10 to 120 minutes, preferably from 15 to 90 minutes. The mixing of the components is suitably carried out by mixing the silica and the Group IVb compound, followed by addition of water.

In order to obtain strong extrudates, i.e. extrudates having a high crush strength, especially after drying and/or calcination, it may be preferred to add a certain amount of a basic compound to the mixture. It is especially preferred to add ammonia, an ammonia releasing compound or an organic amine or ammonium compound to the mixture as these compounds do not leave behind any traces after calcination. A preferred organic amine compound is ethanol amine.

After the mulling has been carried out, the mixture may be extruded in any conventional extruder. A screw type machine may be used to extrude the mix through a die plate with orifices of the desired form and size.

It has appeared that extrusion of mixtures having a high pH is more difficult than mixtures having a pH in the range of 7.0 to 8.5. Thus, it is preferred in those cases in which the mixture has a pH higher than 8.5 to decrease the pH to a value between 7.5 to 8.5 by addition of an acid compound. Preferably an organic acid is used, as these acids do not leave any traces behind after drying and calcination. Suitable organic acids are for instance alkanoic acids having 1 to 12 carbon atoms, preferably 1 to 6 carbon atoms, and dicarboxylic acids, preferably containing 1 to 6 carbon atoms. Very suitably alkanoic acid as formic acid, acetic acid, propionic acid and butyric acid may be used. Acetic acid is especially preferred. Very suitable dicarboxylic acids are oxalic acid, malonic acid, succinic acid, glutaric acid and phthalic acid. The above mentioned acids may be substituted by alkoxy groups, particularly having less than five carbon atoms, hydroxy groups and cyano groups. Beside organic acids, inorganic acids such as hydrogen fluoride, hydrogen chloride, hydrogen bromide, nitric acid, nitrous acid and perchloric acid may be used.

To improve the flux properties of the mixture in the extruder a surface active agent or a polyelectrolyte may be added to the mixture. The addition of the surface active agent or the polyelectrolyte further results in a smoother extrudate texture and facilitates cutting of the extruded product. Further, formation of macropores in the calcined catalytic material may be improved which may enhance the catalytic properties of these products. Suitable surface active agents are cationic surface active agents (e.g. fatty amines, quaternary ammonium compounds, aliphatic monocarboxylic acids, ethoxylated alkyl amines, polyvinyl pyridine, sulphoxonium, sulphonium, phosphonium and iodonium compounds), anionic surface active agents (e.g. alkylated aromatics, acyclic monocarboxylic acids, fatty acids, sulphonated aromatics, alcohol sulphates, ether alcohol sulphates, sulphated fats and oils and phosphonic acid salts) and nonionic surface active agents (e.g. polyoxyethylene alkylphenols, polyoxyethylene alcohols, polyoxyethylene alkylamines, polyoxyethylene alkylamides, polyols and acetylenic glycols). The amount of flux improver is preferably from 2 to 8 % (wt), more preferably from 3 to 5 % (wt). Preferred flux improvers are sold under the trademarks Nalco and Superfloc.

It is possible prior to extrusion to admix titanium dioxide, zirconium dioxide and/or aluminium trioxide or precursor compounds thereof as hydroxides of titanium, zirconium or aluminium to the mixture. Other admixtures that may be used are, for example, oxides of gallium, indium, thorium, uranium, magnesium and zinc. The amount of each of the additional compounds as indicated above is suitably up to 20% by weight calculated on the amount of silica carrier, preferably up to 10%, more preferably up to 5%. The total amount of the additional compound suitably does not exceed 50% by weight calculated on the amount of silica carrier, preferably does not exceed 30%, more preferably does not exceed 15%.

The silica extrudates obtained according to the extrusion process as described hereinbefore are suitably calcined in air at a temperature of from 300 °C to 1000 °C, preferably from 600 °C to 900 °C.

The extruded, calcined and washed catalyst precursors prepared as described hereinbefore are used to prepare catalysts for use in the preparation of hydrocarbons from synthesis gas, a reaction which is known in the literature as the Fischer-Tropsch reaction. Very suitable Fischer-Tropsch catalysts as well as a very suitable process in which the catalysts may be applied have been described in the prior art, for example European patent application publication number 0 127 220.

Catalysts to be used for hydrocarbon synthesis may be prepared by application of a suitable, catalytically active metal, for example iron, cobalt ruthenium or nickel, or mixtures thereof, preferably cobalt, to the extrudates.

The metal may be applied to the calcined extrudates by one or more known techniques, for instance impregnation, ion exchange, chemical anchoring or (reactive) precipitation. Preferably impregnation is used. Impregnation may be carried out by contacting a compound of the relevant metal in the presence of an impregnation liquid, usually in the form of a solution of the relevant metal compound. As metal compounds organic and inorganic compounds may be used. Preferred cobalt compounds are inorganic cobalt compounds, preferably cobalt nitrate.

The impregnation liquids to be used may be organic or inorganic. Mixtures of liquids may also be used. A preferred impregnation liquid is water. In all preparation procedures the liquid used for the metal application is removed from the composition, whereafter the dried composition is usually calcined and optionally reduced. The amount of catalytically active metal to be deposited on the carrier is suitably from 3 to 100 pbw per 100 pbw of silica in the carrier, preferably from 10 to 80 pbw, still more preferably from 20 to 60 pbw. If necessary, one or more metal or metal oxide promoters may also be applied to the extrudates, either before application of the catalytically active metal or after application of the catalytically active metal. The promoter(s) may also be applied before as well as after application of the catalytically active metal. Suitable metal oxide promoters may be chosen from the Groups IIa, IIIb, IVb and Vb of the Periodic Table as well as from the actinides and lanthanides. Also chromium may be used. Very suitably magnesium, calcium, strontium, barium, scandium, yttrium, lanthanum, cerium, titanium, zirconium, hafnium, thorium, uranium, vanadium and chromium may be used. Suitable metal promoters may be chosen from Groups VIIb or VIII of the Periodic Table. Very suitably rhenium and Group VIII noble metals, especially ruthenium, platinum and palladium, may be used. The amount of promoter is suitably from 0.1 to 150 pbw per 100 pbw of silica in the carrier.

Before contacting the catalyst with the hydrogen/carbon monoxide mixture, in the process of the present invention, the catalysts are usually activated by reduction with hydrogen or a hydrogen containing gas. The reduction may vary suitably be carried out at a temperature of from 200 to 350 °C and a pressure of from 2 to 20 bar.

The conversion of the mixture of hydrogen and carbon monoxide may be carried out at a temperature from 125 to 350 °C, preferably from 175 to 250 °C, and a pressure of from 5 to 100 bar, preferably from 12 to 50 bar.

The hydrogen and carbon monoxide containing feed, which is to be converted into hydrocarbons by using a catalyst prepared in a way as described hereinbefore, preferably has a H₂/CO molar ratio higher than 1.5, preferably from 1.75 to 2.25. If the feed has a H₂/CO molar ratio lower than 1.5, the latter is preferably raised to have a value of from 1.5 to 2.5, preferably from 1.75 to 2.25. It is observed that when unconverted hydrogen and carbon monoxide is recirculated over the catalyst bed, it is possible to choose the circumstances in such a way that the catalyst is contacted with a synthesis gas having a substantial lower H₂/CO ratio than the feed synthesis gas, for example in the range of from 0.9 to 1.3. Thus, the selectivity to longer hydrocarbon chains may be improved.

The catalysts prepared according to the above described processes when used for the conversion of hydrogen/carbon monoxide mixtures yield a substantially paraffinic product whose high-boiling part may be converted in high yield into middle distillates by the use of a catalytic hydrotreatment. The feed for the hydrotreatment chosen is at least the part of the product whose initial boiling point lies above the final boiling point of the heaviest middle distillates desired as end product, although the complete product may also be used as feed for the catalytic hydrotreatment.

The invention is further illustrated by the following examples. The results of experiments 1 to 12 of Examples 2 to 5 are set out in the Table.

### EXAMPLE 1

A mixture was prepared having the following composition: silica (precipitated silica, average particle size 50 µm surface area 450 m²/g), ammonium zirconium carbonate (14% by weight calculated as ZrO₂ on SiO₂) and water, the mixture having a loss on ignition of 59%. The mixture was mulled for 30 minutes. After mulling acetic acid was added in such an amount that the pH decreased from about 9.5 to 8.3 and mulling was continued for 10 minutes. To improve extrusion 4% by weight of the polyelectrolyte NALCO (trademark) was added and after addition mulling was continued for another 10 minutes. The mixture was extruded using a DELRIN (trademark) dieplate and trilobes having a nominal diameter of 1.4 mm were obtained. The extrudates were dried at 120 °C for 2 hours and calcined in air at 700 °C for 2 hours.

### EXAMPLE 2

The extrudates obtained in example 1 were analysed for their sulphur and sodium content. It was found that the non-washed extrudates contained 0.084 % by weight of sulphur and 0.672 % by weight of sodium calculated on the total amount of extrudate. Three columns (experiments 1, 2 and 3) were filled with 25 ml of non-washed extrudate and kept at a temperature of 30, 60 and 90 °C respectively. The washing treatment was carried out by leading 250 ml of demineralised water through the columns in about 30 minutes. Before analysis of the washed extrudates, the washed extrudates were further washed over a glass-filter with demineralised water (3 times) and dried in air at room temperature. It can be seen from the Table that washing with demineralised water reduces the amount of sulphur to about 0.04 % by weight. The amount of sodium is only slightly reduced.

### EXAMPLE 3

The general procedure of Example 2 was repeated with the exception that the washing treatment was carried out with a 1 M ammonium acetate solution for about 25 minutes (experiments 4, 5 and 6). With washing at 90 °C the sodium content was reduced to 0.22 % by weight.

### EXAMPLE 4

The general procedure of Example 2 was repeated with the exception that the washing treatment was carried out with a 0.1 M nitric acid solution for about 18 minutes (experiments 7, 8 and 9). With washing at 90 °C the sodium content was reduced to 0.17 % by weight.

### EXAMPLE 5

The general procedure of Example 2 was repeated with the exception that the washing treatment was carried out with a 1 M ammonium nitrate solution for about 18 minutes (experiments 10, 11 and 12). With washing at 90 °C the sodium content was reduced to 0.19 % by weight.

### EXAMPLE 6

The general procedure of Example 1 was repeated and the extrudate obtained was analysed for its sulphur and sodium content. It was found that the non-washed extrudate contained 0.23 % by weight of sulphur and 0.33 % by weight of sodium. The non-washed extrudate was washed in a continuous manner at ambient conditions, by contacting the extrudate counter-currently with an aqueous 1M ammonium acetate solution for 15 minutes at a liquid/solid volume ratio of 3.05. This washing step was followed by a second step in which the extrudate was contacted counter-currently with water for 10 minutes at a liquid/solid volume ratio of 1.25. The two steps of this washing treatment were divided into smaller steps of 5 minutes duration. After each smaller step, the washing solution was refreshed. After this washing treatment the extrudates contained 0.085 % by weight of sulphur and 0.12 % by weight of sodium.

### EXAMPLE 7

The general procedure of Example 1 was repeated and the extrudates obtained were analysed for their sulphur and sodium content. It was found that the non-washed extrudates contained 0.11 % by weight of sulphur and 0.54 % by weight of sodium (extrudate 1).

### EXAMPLE 8

A portion of extrudate 1, obtained in Example 7, was washed in two steps with water at room temperature for 20 minutes. An extrudate was obtained having a sulphur content of 0.03 % by weight and a sodium content of 0.54 % by weight (extrudate 2).

### EXAMPLE 9

A portion of extrudate 1, obtained in Example 7, was washed in a first step with a 1M ammonium acetate solution and in a second step with water, both steps being at room temperature and having a duration of 20 minutes. An extrudate was obtained having a sulphur content of 0.03 % by weight and a sodium content of 0.12 % by weight (extrudate 3).

### EXAMPLE 10

The extrudates 1, 2 and 3 obtained in Examples 7, 8 and 9 respectively, were used for the preparation of Fischer-Tropsch catalysts 1, 2 and 3 by impregnating them with cobalt (30 parts by weight cobalt on 100 pbw silica). Impregnation was carried out using a concentrated solution of cobalt nitrate. After impregnation of the carriers the impregnated particles were dried and calcined. After activation with hydrogen, the activated catalyst particles were contacted in a fixed bed reactor with synthesis gas at a H₂/CO ratio of 1.1 and an inlet pressure of 26 bar). A heavy wax was obtained. For catalyst 1, falling outside the scope of the invention, a 100 g/l/h space time yield (100 STY) was obtained at 232 °C with a C₅+ selectivity of 81 % by weight. With the water washed catalyst 2 a lower 100 STY temperature of 220 °C was obtained with a C₅+ selectivity of 87 % by weight. The use of ammonium acetate washed catalyst 3 resulted in an even lower 100 STY temperature of 212 °C with a C₅+ selectivity of 87.5 % by weight.

**TABLE**

| Experiment No. | % by weight sulphur | % by weight sodium |
|---|---|---|
| 1 | 0.04 | 0.57 |
| 2 | 0.04 | 0.58 |
| 3 | 0.04 | 0.56 |
| 4 | 0.04 | 0.28 |
| 5 | 0.04 | 0.25 |
| 6 | 0.04 | 0.22 |
| 7 | 0.05 | 0.28 |
| 8 | 0.05 | 0.24 |
| 9 | 0.05 | 0.17 |
| 10 | 0.04 | 0.25 |
| 11 | 0.04 | 0.22 |
| 12 | 0.04 | 0.19 |

## Claims

1. Process for the preparation of hydrocarbons by contacting a mixture of carbon monoxide and hydrogen with an extruded catalyst active for that process, comprising a catalytically active metal and a porous carrier, which carrier contains not more than 0.1% by weight of sulphur containing ions, and optionally not more than 0.5% by weight of alkali or alkaline earth ions which catalyst has been prepared by a process comprising washing the catalyst or a catalyst precursor obtained after calcination of a non-washed extrudate with at least one aqueous wash.

2. Process as claimed in claim 1, characterized in that the wash comprises water or a mixture of water and one or more water-miscible organic compounds.

3. Process as claimed in claim 2, characterized in that the water-miscible organic compound is an alcohol having from 1 to 10 carbon atoms, preferably from 1 to 4 carbon atoms, especially methanol or ethanol.

4. Process as claimed in either of claims 1 or 2, characterized in that the wash comprises one or more electrolytes, preferably selected from the group consisting of organic acids, inorganic acids or salts thereof, more preferably selected from the group consisting of alkanoic acids having 1 to 12 carbon atoms, preferably 1 to 6 carbon atoms; dicarboxylic acids, preferably having 1 to 6 carbon atoms, said alkanoic and dicarboxylic acids optionally being substituted by one or more alkoxy groups, having less than 5 carbon atoms, hydroxy groups and cyano groups; hydrogen fluoride; hydrogen chloride; hydrogen bromide; nitric acid; nitrous acid; perchloric acid; phosphoric acid and/or one or more salts thereof, preferably ammonium salts.

5. Process as claimed in claim 4, characterized in that the electrolyte concentration in the aqueous wash is in the range of from 0.05 M to 5 M.

6. Process as claimed in any one of claims 1 to 5, characterized in that the washing treatment comprises two steps, in which first step a wash comprising one or more electrolytes is used and in which second step water or a mixture of water and one or more water-miscible organic compounds is used.

7. Process as claimed in any one of claims 1 to 6, characterized in that the washing treatment comprises three steps in which first and second step a wash comprising one or more electrolytes is used and in which third step water or a mixture of water and one or more water-miscible organic compounds is used.

8. Process as claimed in any one of claims 1 to 7, characterized in that the washing treatment is carried out at a temperature of from 0 °C to 120 °C, preferably from 10 °C to 95 °C.

## Patentansprüche

1. Verfahren zur Herstellung von Kohlenwasserstoffen, bei dem man eine Mischung aus Kohlenmonoxid und Wasserstoff mit einem für dieses Verfahren aktiven extrudierten Katalysator, enthaltend ein katalytisch aktives Metall und einen porösen Träger, in Berührung bringt, wobei der Träger nicht mehr als 0,1 Gew.-% schwefelhaltige Ionen und gegebenenfalls nicht mehr als 0,5 Gew.-% Alkali- oder Erdalkalimetallionen enthält und der Katalysator durch ein Verfahren, bei dem man den Katalysator oder einen nach dem Calcinieren eines nicht gewaschenen Extrudats erhaltenen Katalysatorvorläufer mit mindestens einer wäßrigen Waschlösung wäscht, hergestellt worden ist.

2. Verfahren nach Anspruch 1, dadurch gekennzeichnet, daß man als Waschlösung Wasser oder eine Mischung aus Wasser und einer oder mehreren mit Wasser mischbaren organischen Verbindungen einsetzt.

3. Verfahren nach Anspruch 2, dadurch gekennzeichnet, daß man als mit Wasser mischbare organische Verbindung einen Alkohol mit 1 bis 10 Kohlenstoffatomen, bevorzugt mit 1 bis 4 Kohlenstoffatomen, insbesondere Methanol oder Ethanol, einsetzt.

4. Verfahren nach Anspruch 1 oder 2, dadurch gekennzeichnet, daß die Waschlösung einen oder mehrere Elektrolyte, bevorzugt ausgewählt aus der Gruppe bestehend aus organischen Säuren, anorganischen Säuren oder deren Salzen, besonders bevorzugt ausgewählt aus der Gruppe bestehend aus Alkansäuren mit 1 bis 12 Kohlenstoffatomen, bevorzugt mit 1 bis 6 Kohlenstoffatomen; Dicarbonsäuren, bevorzugt mit 1 bis 6 Kohlenstoffatomen, wobei die Alkansäuren und Dicarbonsäuren gegebenenfalls durch eine oder mehrere Alkoxygruppen mit weniger als 5 Kohlenstoffatomen, Hydroxygruppen und Cyanogruppen substituiert sind; Fluorwasserstoff; Chlorwasserstoff; Bromwasserstoff; Salpetersäure; salpetriger Säure; Perchlorsäure; Phosphorsäure und/oder einem oder mehreren Salzen davon, bevorzugt Ammoniumsalzen, enthält.

5. Verfahren nach Anspruch 4, dadurch gekennzeichnet, daß die Elektrolytkonzentration in der wäßrigen Waschlösung im Bereich von 0,05 M bis 5 M liegt.

6. Verfahren nach einem der Ansprüche 1 bis 5, dadurch gekennzeichnet, daß man die Waschbehandlung in zwei Schritten durchführt, wobei man im ersten Schritt eine einen oder mehrere Elektrolyte enthaltende Waschlösung und im zweiten Schritt Wasser oder ein Mischung aus Wasser und einem oder mehreren mit Wasser mischbaren organischen Verbindungen verwendet.

7. Verfahren nach einem der Ansprüche 1 bis 6, dadurch gekennzeichnet, daß man die Waschbehandlung in drei Schritten durchführt, wobei man im ersten und im zweiten Schritt eine einen oder mehrere Elektrolyte enthaltende Waschlösung und im dritten Schritt Wasser oder ein Mischung aus Wasser und einem oder mehreren mit Wasser mischbaren organischen Verbindungen verwendet.

8. Verfahren nach einem der Ansprüche 1 bis 7, dadurch gekennzeichnet, daß man die Waschbehandlung bei einer Temperatur von 0°C bis 120°C, bevorzugt von 10°C bis 95°C, durchführt.

## Revendications

1. Procédé de préparation d'hydrocarbures par la mise en contact d'un mélange de monoxyde de carbone et d'hydrogène avec un catalyseur extrudé présentant une activité pour ce processus, qui comprend un métal catalytiquement actif et un support poreux, lequel support ne contient pas plus de 0,1% en poids d'ions contenant du soufre et, éventuellement, pas plus de 0,5% en poids d'ions de métaux alcalins ou de métaux alcalino-terreux, lequel catalyseur a été préparé par un procédé comprenant le lavage du catalyseur, ou d'un précurseur du catalyseur, obtenu après calcination d'un extrudat non lavé par au moins une liqueur de lavage aqueuse.

2. Procédé suivant la revendication 1, caractérisé en ce que la liqueur de lavage est constituée d'eau ou d'un mélange d'eau et d'un ou plusieurs composés organiques miscibles à l'eau.

3. Procédé suivant la revendication 2, caractérisé en ce que le composé organique miscible à l'eau est un alcool possédant de 1 à 10 atomes de carbone, de préférence, 1 à 4 atomes de carbone, plus spécialement le méthanol ou l'éthanol.

4. Procédé suivant l'une quelconque des revendications 1 et 2, caractérisé en ce que la liqueur de lavage comprend un ou plusieurs électrolytes, choisis, de préférence, dans le groupe formé par les acides organiques, les acides inorganiques ou des sels de ceux-ci, mieux encore, choisis dans le groupe formé par les acides alcanoïques possédant de 1 à 12 atomes de carbone, de préférence, 1 à 6 atomes de carbone, les acides dicarboxyliques, de préférence, ceux qui comportent de 1 à 6 atomes de carbone, lesdits acides alcanoïques et lesdits acides dicarboxyliques étant éventuellement substitués par un ou plusieurs radicaux alcoxy, comportant moins de 5 atomes de carbone, groupes hydroxyle et groupes cyano, l'acide fluorhydrique, l'acide chlorhydrique, l'acide bromhydrique, l'acide nitrique, l'acide nitreux, l'acide perchlorique, l'acide phosphorique et un ou plusieurs de leurs sels, de préférence, les sels d'ammonium.

5. Procédé suivant la revendication 4, caractérisé en ce que la concentration en électrolyte dans la liqueur de lavage aqueuse varie de 0,05 M à 5 M.

6. Procédé suivant l'une quelconque des revendications 1 à 5, caractérisé en ce que le traitement de lavage comprend deux étapes, où dans la première étape, on utilise une liqueur de lavage comprenant un ou plusieurs électrolytes et où, dans la seconde étape, on utilise de l'eau ou un mélange d'eau et d'un ou plusieurs composés organiques miscibles à l'eau.

7. Procédé suivant l'une quelconque des revendications 1 à 6, caractérisé en ce que le traitement de lavage comprend trois étapes, où, au cours de la première et de la seconde étapes, on utilise une liqueur de lavage comprenant un ou plusieurs électrolytes et où, au cours de la troisième étape, on utilise de l'eau ou un mélange d'eau et d'un ou plusieurs composés organiques miscibles à l'eau.

8. Procédé suivant l'une quelconque des revendications 1 à 7, caractérisé en ce que l'on entreprend le traitement de lavage à une température de 0°C à 120°C, de préférence, de 10°C à 95°C.
